# EUROPEAN PATENT APPLICATION

(11) **EP 1 207 468 A2**
(43) Date of publication of application: **22.05.2002**
(21) Application number: 01309614.4
(22) Date of filing: 14.11.2001
(51) Int. Cl.: G06F 17/30

(54) **A method and system for updating a searchable database of descriptive information describing information stored at a plurality of addressable logical locations**

(30) Priority: 14.11.2000 GB 0027770
(71) Applicant: ITT MANUFACTURING ENTERPRISES, INC., Wilmington, Delaware 19801 (US)
(72) Inventor: Learmonth, Iain Thomas, North Waltham, Basingstoke RG25 2BP (GB)
(74) Representative: Collins, John David

(57) **Abstract**

A method and system for providing a group of users with a search facility for information stored at a plurality of addressable logical locations is described. A database of index information where information is stored at a plurality of logical locations is provided. The index information includes the address of the logical locations and the descriptive information for information stored at each logical location. The descriptive information matches a common profile of interest to the group of users. Accessing and retrieval of stored information by a user in the group is monitored and descriptive information is derived using the retrieved information. The relevance of the retrieved information is determined by comparing the descriptive information to the profile. If the retrieved information is determined to be relevant, the database is updated using the address and the descriptive information of the determined relevant retrieved information.

## Description

The present invention generally relates to a method and system for providing a group of users with a search facility for information stored at a plurality of addressable logical locations. In particular the present invention relates to a method and system for updating a database searchable by a group of users and containing descriptive information and addresses for the stored information.

The provision of a search capability for information stored at a plurality of addressable locations is a problem when the amount of information becomes large and distributed. It is known in the art to provide a database of index information which is searchable to enable the address of the stored information to be located based on descriptive information stored with the address in the database.

With the prevalent use of the Internet, and in particular the World Wide Web, the problem for searching for and retrieving information in the form of web pages is a problem that has received much attention in the art. Many search engines have been developed which search and catalogue web pages to form a database of addresses and descriptive information for those addresses. A user is thus able to submit a query to the search engine to search the database to retrieve web pages best matching the query.

The problem with many prior art search engines is that they try to cover the whole of the World Wide Web. This is an almost impossible task in view of the fluid nature of the Internet. Also, many of the results of the search will not be relevant to the user's interests. Further, the requirement for cataloguing the whole of the Internet provides a vast burden on the processing power required.

One prior art system disclosed in US 5931907 comprises the local storage of information as a distributed database by a community of agents. When a page is loaded and considered to be of interest to a user, the agent can be instructed to catalogue the page and the user can add additional user information. Other users of agents within the community can be notified of the potentially interesting information. In this way a community of users have access to potentially interesting information distributed across the network.

One disadvantage of this arrangement is that the information is not held centrally at the database and requires each of the agents to communicate with each of the other agents within the network. Further, the cataloguing of web pages is only instigated manually after a user has inspected the page.

It is an object of the present invention to provide an improved search facility for information such as web pages to a group of users with common interests.

In accordance with one aspect, the present invention provides a method and system for providing a group of users having a common interests with a search facility for information stored in a plurality of addressable logical locations. A database of index information for information that is stored at the plurality of logical locations is provided in which the index information includes the address of the logical locations and descriptive information for information stored at each logical location. The descriptive information matches a common profile of interest of the group of users. The accessing and retrieval of stored information by a user in the group is monitored and descriptive information is derived using the retrieved information. The relevance of the retrieved information is determined by comparing the descriptive information to the profile and if any relevant retrieved information is determined, the database is updated using the address and descriptive information of the determined relevant retrieved information.

The present information can be implemented in a single apparatus such as a suitably programmed general purpose computer or dedicated hardware. However the present invention is more preferably applicable to a network wherein the database is provided at a server and within a client the accessing and retrieval of stored information, the monitoring of the accessing and retrieval, and the deriving of the descriptive information takes place. The address and the derived descriptive information is then sent to the server for updating of the database at the server.

The determining of the relevance of the retrieved information can take place in the client or in the server. Preferably the determination takes place in the client in order to reduce the amount of information transmitted to the server and to distribute the processing load.

In one embodiment an initial request from a client to access the database at the server is sent and an agent is downloaded from the server to the client in response. The agent comprises an autonomous application which when installed and running on the client performs the monitoring, determining and sending processes. The agent thus uses the profile to identify relevant information to be used to update the database. The application can be implemented in a multi tasking environment in the background.

In a preferred embodiment, the user of the client is warned that in order to use the search facility i.e. to be able to access the database, the agent must be downloaded. Access is denied to the database without the agent being installed on the client. Only when the user inputs a confirmation which is sent by the client to the server is the agent downloaded to the client from the server.

Thus the trade off by a user for access to the search facility is that their computer is used to use their activities to contribute towards updating the database. The user is a member of a group of users who have a common interest and thus the agent has a profile representative of the common interest of the group. Thus for the user to access the database, they allow the distributive processing of information locations visited in order to update the database for the common good of the group.

The present invention is suited to any system in which information is stored at addressable logical locations. The present invention is however particularly suited to the Internet in which the Internet Protocol is used and the stored information includes hypertext mark-up language. The logical addresses thus comprise Uniform Resource Locators (URLs). In this embodiment the client will implement a web browser to access web pages hosted by web servers and the agent on the client will monitor the accessing and retrieval of web pages.

In addition to the monitoring of the pages actually visited by the client, the agent can also include a "spidering" capability. Links from the web page access and retrieved can be "spidered" or crawled by the agent in order to access and retrieve the web pages and determine descriptive information for further expanding the updating of the database. The web pages which are spidered or crawled are processed to determine descriptive information and the descriptive information is then analysed to determine the relevance of the page. In this way index information only for relevant pages is sent to the server.

In one embodiment, the database is periodically checked to see if there are any entries in the database which have not been recently updated. If there are any entries which have not recently been updated, the web page can be accessed and retrieved by a spidering function at the server. Descriptive information for the page can then be determined and compared with the profile to determine if the page is relevant still. If not the page is deleted from the database. If the page is relevant the entry in the database is updated with the new descriptive information and a date to show when it was updated.

The profile can comprise any information suitable for defining the common interests of the groups of users. When the stored information includes text such as web pages, the profile comprises descriptive information which comprises text. The determination of relevance can then be performed on a keyword basis by matching the keywords of the profile to keywords in the descriptive information. The keyword matching will not be exact and can be based on lexical matching of synonyms. As an alternative matching technique, natural language matching of the text of the profile and the text of the descriptive information can be used.

The present invention can be implemented on a single apparatus or on a client apparatus and a server apparatus each comprising suitably programmed general purpose computer. Thus the present invention can be embodied as computer programme code for controlling a general purpose computer. The computer programme code can be provided to a general purpose computer on any suitable carrier medium such as a storage medium (e.g. floppy disk drive, CD ROM, magnetic tape or programmable memory device) or a signal (such as an electrical signal carried over a network such as the Internet).

An embodiment of the present invention will now be described with reference to the accompanying drawings, in which:
Figure 1 is a schematic diagram of a system in accordance with an embodiment of the present invention,
Figure 2 is a flow diagram illustrating the process of downloading the agent from the server to the client in the embodiment of the present invention,
Figure 3 is a flow diagram illustrating the process of determining and sending descriptive information from the client to the server in the embodiment of the present invention,
Figure 4 is a flow diagram illustrating the process in the server for updating the database using the received information from the agent in the embodiment of the present invention, and
Figure 5 is a flow diagram illustrating the process of periodically updating the database in accordance with the embodiment of the present invention.

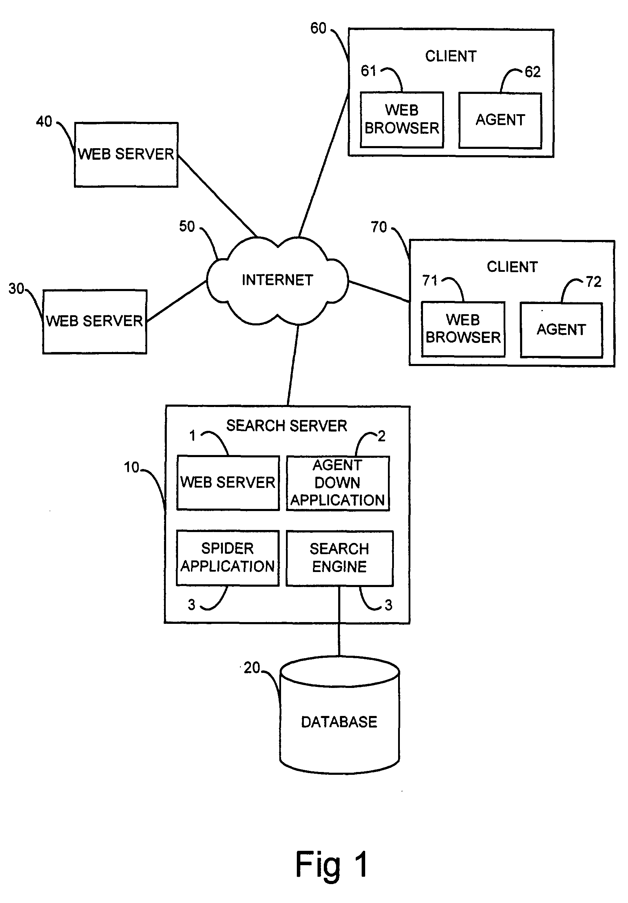

Figure 1 schematically illustrates a system in accordance with an embodiment of the present invention for implementation as a search facility for web pages over the Internet 50.

Clients 60 and 70 are connected to the Internet 50 in order to access web pages at web servers 30 and 40. The clients 60 and 70 have respective web browsers 61 and 71 implemented therein for accessing and retrieving web pages from the web servers 30 and 40. The clients 60 and 70 also have respective agents 62 and 72 loaded therein which have been downloaded to them in order to monitor the activity of the respective web browsers 61 and 71. The agents are autonomous applications which run in the background in a multi-tasking environment on the clients 60 and 70 such as in the Windows (registered trade mark) operating system. The agents 62 and 72 are able to communicate on the Internet 50 to a search server 10 in order to communicate the results of their monitoring activities.

The search server 10 is connected to the Internet 50 to enable the clients 60 and 70 to access a search engine 3 via a web server 1 acting as the interface to the client's 60 and 70 using the web browsers 61 and 71. The search engine 3 interfaces to a database 20 providing a database of index information comprising logical addresses and descriptive information. In this embodiment the logical addresses comprise the URLs of web pages and the descriptive information comprises key words taken from the text of the web page (which can include the metatags). Thus a client 60 or 70 accesses the search server 10 using respective web browser 61 or 71 to access the web server 1 which acts as the interface and communicates with the search engine 3 to search the database 20. Thus the web server 1 and search engine 3 can provide a conventional search facility for searching database 20. However, the interface to the database 20 differs from conventional search engine interfaces in that when an initial request from a web browser 61 or 71 is received an agent download application 2 will detect whether the request comes from a client 60 or 70 which has an agent 62 or 72 loaded thereon. If not the agent download application 2 will cause the web server 1 to warn the user of the web browser 61 or 71 that an agent must be downloaded in order to access the database 20 using the search engine 3. If the user inputs an acceptance, this is received from the web browser 61 or 71 by the web server 1 and passed to the agent download application 2 which downloads the agent 62 or 72 to the client 60 or 70. Thus when the web browser 61 or 71 next requests access to the search engine 3, access is permitted.

The search server 10 is also provided with a spider application 3 for carrying out the conventional spidering operation in order to periodically update the database 20.

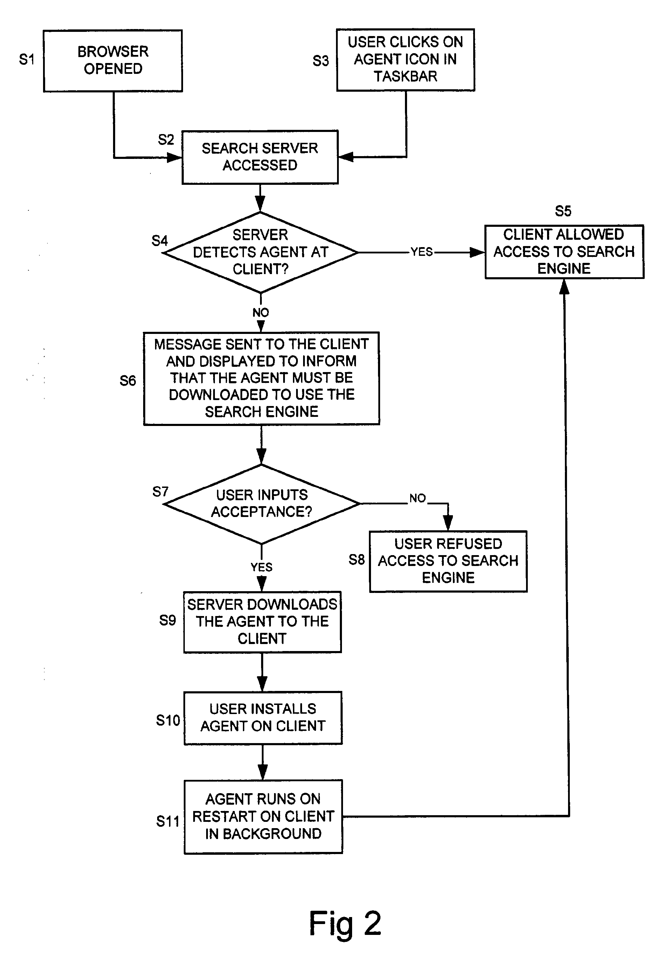

The method of operation of the present invention will now be described in more detail with reference to the flow diagrams of Figures 2 to 5.

Figure 2 is a flow diagram illustrating the process of downloading the agent to the client in order to allow access to the search engine. When the client initially attempts to connect to the web server, in step S1 the browser is opened and used to access and retrieve a web page at the search server (step S2). The request to retrieve the web page from the browser will also include a request to access the search engine. In step S4 the search server detects whether there is an agent at the client. If an agent is present, in step S4 the client is allowed access to the search engine in order to search for web pages using keywords etc. in a conventional manner.

If the agent is not detected at the client (step S4), in step S6 a message is sent to the client and displayed to inform the user of the client that the agent must be downloaded in order to use the search engine. This message can be in the form of a web page with a check box for example to enable the user to accept the downloading of the agent in return for access to the search engine. In step S7 a user acceptance is then awaited. If no user acceptance is input, in step S8 the user is refused access to the search engine. For example, if a user selects to decline downloading of the agent, a web page can be set to the web browser to inform the user that access to the search engine is refused.

Once the search server receives the acceptance from the agent, in step S9 the agent download application 2 downloads the agent to the client. The agent comprises an autonomous application capable of running in the background. The agent will include in the code or as metadata a profile defining the common interests of the group of users. The profile can comprise a set of keywords. Once the agent has been downloaded in step S9, in step S10 the agent is installed from the client as is conventional in the Windows (trade mark) operating system, in step S11 when the client is restarted, the agent runs automatically in the background. From then on the client is allowed access to the search engine (step S5). The installation of the agent on the client causes an icon to be added to the task bar in the Windows (trade mark) operating system display. Thus the next time a user wishes to access the search engine, they can either use the web browser (step S1) or they can click on the agent icon in the task bar (step S3). If the agent icon is clicked on in the task bar, the web browser is launched and directed to access the search server. Alternatively the agent can include a web browser interface to act as the search interface for the client to access the search server to perform a search through the database 20.

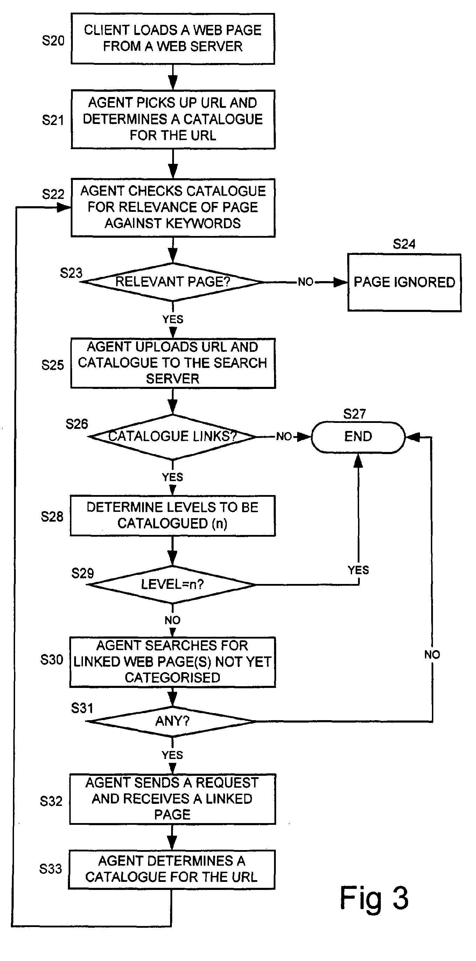

The operation of the agent on the client will now be described in more detail with reference to the flow diagram of Figure 3.

In step S20 the client loads a web page from a web server 30 or 40. The agent picks up the URL and determines a catalogue for the URL (step S1). The catalogue can comprise any descriptive information. In this embodiment the process comprises the extraction of keywords from the hypertext mark up language (HTML). Methods for determining a catalogue for a web page are well known in the art and it will be apparent to a skilled person in the art that any known technique can be used for determining the catalogue.

In step S22 the agent checks the catalogue for the relevance of the page against a profile comprising key words which represent the interest of the group of users. Thus if in step S23 it is determined that the page is not relevant since the keywords for the page do not significantly match the key words for the profile, the page is ignored in step S24. If it is determined that the keywords (or a significant number of them) match, in step S25 the agent uploads the URL and the catalogue to the search server. Once the URL and catalogue have been uploaded to the search server if the page is relevant, in step S26 the agent determines whether the links on the page are to be catalogued. This can either be a preset parameter for the agent or the agent can determine this based upon the bandwidth (i.e. modem speed or LAN connection - or even mobile link speed) and processing power of the client. Also the server response time can be taken into account. If the links are not to be catalogued the process terminates in step S27. If the links are to be catalogued in step S28 the agent will determine the level of links to be catalogued. Once again the level of the links can be a predetermined number of links, or it can be based upon the processing power or bandwidth available to the client. This avoids too large a proportion of the processing power or communication bandwidth being taken up by the cataloguing process (a spidering process) and avoids a significant downgrading of the performance of the users machine due to the "spidering" process. In step S29 it is determined whether the current cataloguing level has been reached and if so the process terminates in step S27. If not in step S30 the agent searches for linked web pages which have not yet been catalogues. If there aren't any in step S31 the process is terminated at step S27. If there are still linked web pages to be catalogued, in step S32 the agent sends a request and receives a linked page. The agent then determines a catalogue for the URL in step S33 and the process returns to step S22 for the determination of the relevance of the page against the keywords.

It can thus be seen that the process of Figure 2 will continue until all of the pages to a predefined level have been catalogued and, where relevant the URLs and catalogues for the pages have been uploaded to the search server.

Thus in this embodiment of the present invention not only is the page which has been visited by the web browser catalogued and used to update the database, also linked pages can be used to update the database. Thus the activity of the client machine is automatically monitored and when any relevant pages are detected these are used to update the central database for the good of the group of users. This ensures that when many clients are operating, the database is updated within the focus defined by the profile used by each of the agents. The profile in this embodiment comprises a carefully chosen selection of keywords.

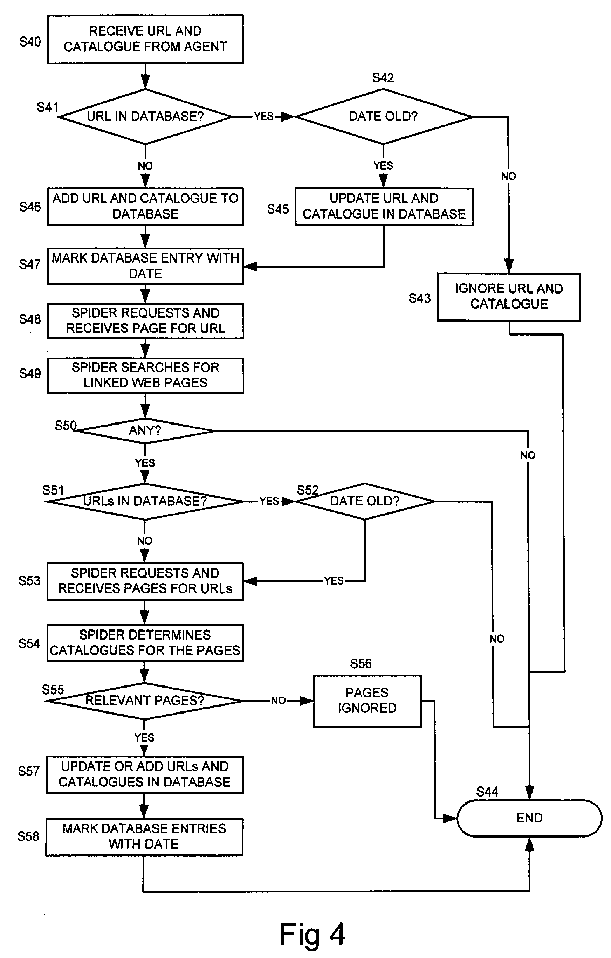

The operation of the server upon receipt of the URL and catalogue from the agent will now be described in more detail with reference to the flow diagram of Figure 4.

In step S40 a URL and catalogue is received from the agent. It is then determined whether the URL is already in the database (step S41) and if so in step S42 it is determined whether the entry in the database has been updated recently or not. If it has been updated recently and the entry is not old (step S43) the URL and catalogue is ignored and the process terminates in step S44. If the entry in the database for the URL is older than the predetermined age, in step S45 the received URL and catalogue is used to update the URL and catalogue in the database and the process proceeds to step S47.

If in step S41 it is determined that the URL is not in the database, in step S46 the URL and catalogue received from the agent is added to the database. Once the database has either been added to or updated (step S46 or step S45) in step S47 the database entry is marked with the date so that the age of the entries in the database can be monitored particularly with regard to step S42.

In order to further expand the database, in step S48 the spider application within the search server requests and receives the page for the URL which has been added to or updated in the database. In step S49 the spider application then searches for any linked web pages on the received page. If there are none (step S50), the process terminates in step S44. If there are linked web pages, in step S51 it is determined whether the URLs are in the database. If so in step S52 it is determined whether the entries in the database are older than a predetermined age and if not the process terminates in step S44. If the entries are old (step S52) or if the URLs are not in the database, in step S53 the spider application requests and receives pages for the URLs. The spider application then determines catalogues for the pages in step S54 and in step S55 it is determined whether the pages are relevant or not by comparing the keywords in the catalogue to the keywords stored as the profile. If the pages are determined not to be relevant, in step S56 the pages are ignored and in step S44 the process terminates.

If the pages are determined to be relevant (step S55) in step 57 the URLs and catalogues are added to or updated in the database. The database entries are then marked with the date in step S58 and the process terminates in step S44.

Thus in this process illustrated in Figure 4, the database is update using
1. a catalogue for the URL visited by the user of a client
2. catalogues for pages linked from the visited page as determined by the client
3. catalogues for links from the visited web page as determined by the server.

The benefit of also providing for a spidering capability at the server is that the client may be provided with a limit spidering capability e.g. the level of the links to be followed by the spider in the client can be limited. This limits the processing power and bandwidth taken up by the agent. The full spidering process can thus be completed or indeed fully carried out by the server.

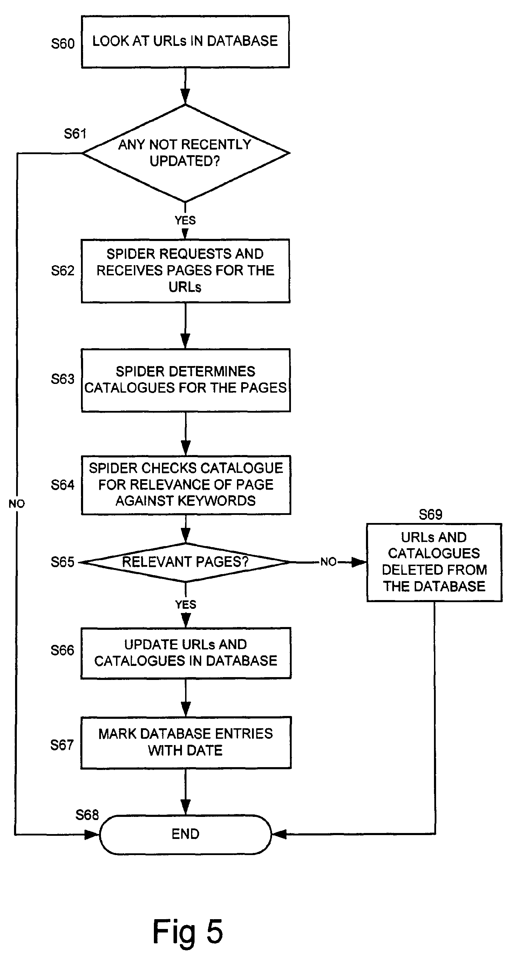

In addition to the spidering process carried out to supplement the catalogues received from the agents, the server can also periodically update the database. This process will be described in more detail with reference to the flow diagram of Figure 5.

In step S60 periodically the spider application will look at the URLs in the database and in step S61 a determination will be made as to whether any have not recently been updated. If all of the entries have recently been updated, the process terminates in step S68. If there are entries in the database which have not been recently been updated (step S61) the spider application requests and receives web pages for the URLs (step S62). The spider application then determines catalogues for the pages (step S63) and checks the relevance of the catalogue against the keywords (step S64). If the pages are not relevant (step S65) in step S69 the URLs are deleted from the database and the process terminates in step S68.

If the pages are determined to be relevant (step S65) in step S66, the URLs and the catalogues in the database are updated and in step S67 the database entries are marked with the date of update. The process then terminates in step S68.

The process of Figure 5 thus comprises a conventional periodic spidering process in order to keep the database up to date. It enables the database to be pruned to remove pages which are not no longer relevant.

Although the present invention has been described hereinabove with reference to a specific embodiment, it will be apparent to a skilled person in the art that modifications lie within the spirit and scope of the present invention.

For example although in the embodiment the spider application 3 is illustrated as residing in the search server 10, the spider application can in fact reside on any physical server on the Internet 50. The spider application could then independently receive the URLs which are also sent to the search server for updating the database so that the spider can spider from these URLs. The resultant relevant links can then be submitted to the search engine much in the same way as relevant links are submitted by agents.

Although in the embodiment the determination of the relevance of the page is implemented by the agent, alternatively, this function could be given to the search server. Thus in this case the agents 62 and 72 will transmit catalogues and URLs for all pages visited by the web browser. Also catalogues and URLs for all links from the visited page can be sent to the search server. It can thus be left for the search server to determine the relevance of the pages for the updating of the database. This process is however less preferred since it increases the amount of data that has be to transmitted by the agents to the search server. Although in the specific embodiment the matching process between the profile and the descriptive information (the catalogue) was performed using keywords, the present invention can be applied to the use of any form of descriptive information. The present invention is particularly suited to the use of text which can allow keyword matching either strictly or on the basis of synonyms or natural language matching of text. It is also possible to define a profile as comprising meta information such as the date of downloading into the web page by the web browser or the address of the originating site. The profile can comprise any information which allows for the definition of the common interests of the group of users using the clients 60 and 70.

Although in the present invention the network on which the clients and the search server are connected is described as comprising the Internet, the present invention is applicable to any network and can for example comprise an Intranet, Extranet, or local area network. The present invention is more widely applicable to any form of information retrieval such as document retrieval over a network wherein a central database of index information is stored to allow for searching for a stored information.

The determination of the relevance of the stored information need not be just based on the profile. The relevance can also be determined based on whether or not the database has recently been updated for that address.

In addition to update the database using retrieved information which matches the profile, a user can select to update the database using any retrieved information by manually selecting it.

The present invention is just not limited to the use of the Internet using web addresses. The present invention is applicable to any logical addressing system and for example covers all protocols using URLs e.g. HTTP, FTP, POP, and SMTP.

The present invention is ideally suited to the searching needs of a specific interest or community. The central database can self-focus, expand and update automatically based on the behaviour of the members of the group. The common interests of the group can be defined by a suitable profile such as keywords and this keeps the domain of the search focused. However, the focusing of the search database does not prevent it being amended and expanded when users view a site that is not currently indexed. So long as the site falls within the current field of interest as defined by the profile, the site will automatically be indexed by the agent and the database updated.

The advantages of this arrangement are that the user community can focus on the development and usefulness of the search indexed over time. The users can update the search catalogue database automatically themselves thus effectively distributing the processing task and requirement for bandwidth over many users.

In the embodiment, the database is described as being updated as soon as a URL is passed from an agent, however, it is possible for the updating process to be modified such that the database is only updated when the URL is submitted by agents a predetermined number of times. This would indicate that one or a number of users who visited the sight more than once, clearly indicating that the sight is relevant and should be added to the database.

## Claims

1. A method of providing a group of users with a search facility for information stored in a plurality of addressable logical locations, the method comprising:
providing a database of index information for information stored at a plurality of the logical locations, the index information including the address of the logical locations and descriptive information for information stored at each logical location, the descriptive information matching a common profile of interest to the group of users;
monitoring accessing and retrieval of stored information by a user in the group;
deriving descriptive information using the retrieved information;
determining the relevance of the retrieved information by comparing the descriptive information to the profile; and
updating the database using the address and descriptive information of any determined relevant retrieved information.

2. A method according to claim 1, wherein the database is provided in a server and the accessing and retrieval of stored information, the monitoring of accessing and retrieval, and the deriving of the descriptive information take place in a client connected to the server by a network, the method including sending the address and the derived descriptive information to the server for the updating of the database.

3. A method according to claim 2, including sending an initial request from the client to access the database at the server, and downloading an agent from the server to the client, wherein the agent performs the monitoring, determining and sending processes.

4. A method according to claim 3, wherein after having received the initial request, the server sends a warning to the client that the agent must be downloaded before allowing access to the database and awaits a confirmatory input from the user before downloading the agent, and the sender only permits access to the database by the client if the agent is loaded thereon.

5. A method according to any one of claims 2 to 4, wherein the determining of the relevance of the retrieved information takes place in the client and the address and the descriptive information for only retrieved information determined to be relevant is sent to the server.

6. A method according to any preceding claim, wherein the stored information at least some of the addresses has links to stored information at other addresses, the method including:
when the retrieved has links, accessing and retrieving information stored at other addresses;
deriving descriptive information using the retrieved information;
determining the relevance of the retrieved information by comparing the descriptive information to the profile; and
updating the database using the address and descriptive information of any determined relevant retrieved information.

7. A method according to any preceding claim, including periodically checking the database to identify any index information which has not been updated recently, if any index information is identified, accessing and retrieving information stored at any of the addresses in the identified index information, deriving descriptive information using the retrieved information, determining the relevance of the retrieved information by comparing the descriptive information to the profile, and updating the database using the address and descriptive information of any determined relevant retrieved information.

8. A method according to any preceding claim, wherein the stored information includes text, the profile comprises descriptive text, and the descriptive information comprises text.

9. A method according to claim 8, wherein the profile comprises keywords, the descriptive information comprises keywords, and the relevance of the retrieved information is determined by matching the keywords of the profile to the descriptive information.

10. A method according to claim 9, wherein the matching process includes lexical matching of synonyms.

11. A method according to claim 8, wherein the relevance of the retrieved information is determined by a natural language matching of the text of the profile with the text of the descriptive information.

12. A method according to any preceding claim, for implementation over an Internet Protocol network, wherein the stored information includes hypertext mark-up language, the addresses comprise Uniform Resource Locators, and the monitoring process monitors the accessing and retrieval of hypertext mark-up language by a web browser application for the display of web pages.

13. A system for providing a group of users with a search facility for information stored on a plurality of addressable logical locations, the system comprising:
a database of index information for information stored at a plurality of the logical locations, the index information including the addresses of the logical locations and descriptive information for information stored at each logical location, the descriptive information matching a common profile of interest to the group of users;
monitoring means for monitoring access and retrieval of stored information by a user in the group;
deriving means for deriving descriptive information using the retrieved information;
determining means for determining the relevance of the retrieved information by comparing the descriptive information to the profile; and
updating means for updating the database using the address and descriptive information of any determined relevant retrieved information.

14. A system according to claim 13, comprising a server and a client connected by a network, the server including the database and the updating means, the client including the monitoring means, the deriving means and sending means for sending the address and the derived description information to the server for the updating of the database.

15. A system according to claim 14, wherein the client includes a search client for sending an initial request to access the database, the server includes download means for downloading an agent to the client, and said agent comprises said monitoring means, said deriving means, and said sending means.

16. A system according to claim 15, wherein said server includes download warning means for, after having received the initial request, sending a warning to the client that the agent must be downloaded before allowing access to the database and receiving a confirmatory input from the user, and said download means is responsive to the confirmatory input to download the agent to the client.

17. A system according to any one of claims 14 to 16, wherein the client includes the determining means, and the sending means is controlled to only send the descriptive information and the address for retrieved information determined to be relevant.

18. A system according to any one of claims 13 to 17, wherein the stored information at least some of the addresses has links to stored information at other addresses; the system including a search application for accessing and retrieving information stored at other linked addresses, deriving descriptive information using the retrieved information; determining the relevance of the retrieved information by comparing the descriptive information to the profile; and updating the database using the address and descriptive information of any determined relevant retrieved information.

19. A system according to any one of claims 13 to 18, including updating means is adapted to periodically check the database to identify any index information which has not been updated recently, to, if any index information is identified, access and retrieve information stored at any of the addresses in the identified index information, to derive descriptive information using the retrieved information, to determine the relevance of the retrieved information by comparing the descriptive information to the profile, and to update the database using the address and descriptive information of any determined relevant retrieved information.

20. A system according to any one of claims 13 to 19, wherein the stored information includes text, the profile comprises descriptive text, and the descriptive information comprises text.

21. A system according to claim 20, wherein the profile comprises keywords, the descriptive information comprises keywords, and the determining means is adapted to determine the relevance by matching the keywords of the profile to the descriptive information.

22. A system according to claim 21, wherein the determining means is adapted to perform a lexical matching of synonyms.

23. A system according to claim 20, wherein said determining means is adapted to determine the relevance of the retrieved information by a natural language matching of the text of the profile with the text of the descriptive information.

24. A system according to claim 14, wherein the network is an Internet Protocol network, the stored information includes hypertext mark-up language, the addresses comprise Uniform Resource Locators, and the monitoring means is adapted to monitor the accessing and retrieval of hypertext mark-up language by a web browser application for the display of web pages.

25. A server apparatus for providing a search service to clients over a network to allow searching for information stored in a plurality of addressable logical locations over the network, the server apparatus comprising:
a database of index information for information stored at a plurality of the logical locations, the index information including the addresses of the logical locations and descriptive information for information stored at each logical location, the descriptive information matching a common profile of interest to a group of users;
a network interface for receiving index information comprising an address and corresponding descriptive information derived by a client apparatus from the information stored at the address; and
a database interface for updating the database using the received index information.

26. A server according to claim 25, including a user interface for receiving an initial request from the client to access the database, and downloading means for downloading an agent to the client, wherein said network interface is adapted to receive the index information from the agent at the client.

27. A server apparatus according to claim 26, wherein said user interface is adapted to, after having received the initial request, send a warning to the client that the agent must be downloaded before allowing access to the database, and to await a confirmatory input from the user, the downloading means being adapted to download the agent to the client in response to the confirmatory input, and the database interface being adapted to permit access to the database by the client if the agent is detected loaded thereon.

28. A server apparatus according to any one of claims 25 to 27, including means for determining the relevance of the received index information by comparing the descriptive information in the index information received by the network interface to the profile, and the database interface is adapted to update the database using the descriptive information and the address for any index information determined to be relevant.

29. A server apparatus according to any one of claims 25 to 28, wherein the stored information at least some of the addresses has links to stored information at other addresses, the server apparatus including a search means for accessing and retrieving information at addresses in the received index information, for, when the retrieved information has links, accessing and retrieving information stored at other addresses, for deriving descriptive information using the retrieved information, for determining the relevance of the retrieved information by comparing the descriptive information to the profile, and for controlling the database interface to update the database using the address and descriptive information of any determined relevant retrieved information.

30. A server apparatus according to any one of claims 25 to 29, including database updating means for periodically checking the database to identify any index information which has not been updated recently, for, if any index information is identified, accessing and retrieving information stored at any of the addresses in the identified index information, for deriving descriptive information using the retrieved information, for determining the relevance of the retrieved information by comparing the descriptive information to the profile, and for controlling the database interface to update the database using the address and descriptive information of any determined relevant retrieved information.

31. A server apparatus according to any one of claims 25 to 30, wherein the stored information includes text, the profile comprises descriptive text, and the descriptive information comprises text.

32. A server apparatus according to claim 31, wherein the profile comprises keywords and the descriptive information comprises keywords.

33. A server apparatus according to claim 28, wherein the profile comprises keywords, the descriptive information comprises keywords, and the determining means is adapted to determine the relevance of the retrieved information by matching the keywords of the profile to the descriptive information.

34. A server apparatus according to claim 33, wherein the determining means is adapted to match the keywords of the profile to the descriptive information using lexical matching of synonyms.

35. A server apparatus according to claim 28, wherein the stored information includes text, the profile comprises descriptive text, the descriptive information comprises text, and the determining means is adapted to determine the relevance of the retrieved information by a natural language matching of the text of the profile with the text of the descriptive information.

36. A server apparatus according to any one of claims 25 to 35, wherein the network interface is adapted to interface to an Internet Protocol network, the stored information includes hypertext mark-up language, the addresses comprise Uniform Resource Locators, and the server includes a web server to act as the interface between requests from the client to the database interface.

37. A method of operating a server providing a search service to clients over a network to allow searching for information stored in a plurality of addressable logical locations over the network, the method comprising:
receiving from a client index information comprising an address for stored information retrieved by a client and descriptive information derived from the stored information; and
updating a database of index information for information stored at a plurality of addressable logical locations using the received index information, wherein the index information in the database includes addresses of the logical locations and descriptive information for information stored at each logical location, the descriptive information matching a common profile of interest to a group of users.

38. A method according to claim 37 including receiving an initial request to access the database from a client, and downloading an agent to the client, wherein the index information is received from the agent on the client.

39. A method according to claim 38 including sending to the client in response to the initial request a warning that the agent must be downloaded before allowing access to the database, controlling the downloading dependent upon a confirmatory response from the client, and permitting access by the client to the database if the agent is detected loaded on the client.

40. A method according to any one of claims 37 to 39 including determining the relevance of the received index information by comparing the descriptive information therein to the profile, wherein the database is updated using only index information determined to be relevant.

41. A method according to any one of claims 37 to 40 wherein the stored information at at least some of the addresses has links to stored information at other addresses, the method including:
accessing and retrieving information at addresses in the received index information;
when the retrieved information has links, accessing and retrieving information at other addresses;
deriving descriptive information using the retrieved information; and
determining the relevance of the retrieved information by comparing the descriptive information to the profile, and updating the database using only address and descriptive information of any determined relevant retrieved information.

42. A method according to any one of claims 37 to 41 including periodically checking the database to identify any index information which has not been updated recently; if any index information is identified, accessing and retrieving information stored at any of the addresses in the identifier index information; deriving descriptive information using the retrieved information; determining the relevance of the retrieved information by comparing the descriptive information to the profile; and updating the database using the address and descriptive information of any determined relevant retrieved information.

43. A method according to any one of claims 37 to 42, wherein the stored information includes text, the profile comprises descriptive text, and the descriptive information comprises text.

44. A method according to claim 43, wherein the profile comprises keywords and the descriptive information comprises keywords.

45. A method according to Claim 40 wherein the profile comprises keywords, the descriptive information comprises keywords, and the relevance of the retrieved information is determined by matching the keywords of the profile to the keywords of the descriptive information.

46. A method according to claim 45 wherein the keywords of the profile are matched to the keywords of the descriptive information by lexical matching of synonyms.

47. A method according to claim 40 wherein the stored information includes text, the profile comprises descriptive text, the descriptive information comprises text, and the relevance of the retrieved information is determined by natural language matching of the text of the profile with the text of the descriptive information.

48. A method according to any one of claims 37 to 47 wherein the network is an Internet Protocol network, the stored information includes hypertext mark-up language, the addresses comprise Uniform Research Locators, and a web browser receives reports from the client to the database.

49. A client apparatus for accessing a server apparatus providing a search service to clients over a network to allow searching for information stored in a plurality of addressable logical locations over the network, the client apparatus comprising:
monitoring means for monitoring accessing and retrieval of stored information by an application on the client;
deriving means for deriving descriptive information using the retrieved information;
determining means for determining the relevance of the retrieved information by comparing the descriptive information to a profile; and
sending means for sending the relevant derived descriptive information and the corresponding address to the server apparatus for the updating of a database.

50. A client apparatus according to claim 49 including search means for sending in initial request to the server apparatus to access the database, and receiving means for receiving an agent from the server to the client, wherein the agent comprises the monitoring means, the deriving means, the determining means and the sending means.

51. A client apparatus according to claim 50 wherein said receiving means is adapted to receive a warning from the server apparatus that the agent must be downloaded before allowing access to the database, the client apparatus including input means to allow a user to input a confirmatory input for transmission to the server apparatus.

52. A client apparatus according to any one of claims 49 to 51 wherein the stored information at least some of the addresses has links to stored information at other addresses; the client apparatus including search means for accessing and retrieving information stored at other linked addresses, for deriving descriptive information using the retrieved information for determining the relevance of the retrieved information by comparing the descriptive information to the profile, and for sending the relevant derived descriptive information and the corresponding address to the server apparatus for the updating of the database.

53. A client apparatus according to any one of claims 49 to 52, wherein the stored information includes text, the profile comprises descriptive text, and the descriptive information comprises text.

54. A client apparatus according to claim 53, wherein the profile comprises keywords, the descriptive information comprises keywords, and the determining means is adapted to determine the relevance by matching the keywords of the profile to the descriptive information.

55. A client apparatus according to claim 54, wherein the determining means is adapted to perform a lexical matching of synonyms.

56. A client apparatus according to claim 53, wherein said determining means is adapted to determine the relevance of the retrieved information by a natural language matching of the text of the profile with the text of the descriptive information.

57. A client apparatus according to any one of claims 37 to 56, wherein the network is an Internet Protocol network, the stored information includes hypertext mark-up language, the addresses comprise Uniform Resource Locators, and the monitoring means is adapted to monitor the accessing and retrieval of hypertext mark-up language by a web browser application for the display of web pages.

58. A method of operating a client for accessing a server providing a search service to clients over a network to allow searching for information stored in a plurality of addressable logical locations over the network, the method comprising:
monitoring accessing and retrieval of stored information by an application on the client;
deriving descriptive information using the retrieved information;
determining the relevance of the retrieved information by comparing the descriptive information to a profile; and
sending the relevant derived descriptive information and corresponding address to the server for the updating of a database.

59. A method according to claim 58 including sending an initial request to the server to access the database, and receiving an agent from the server, wherein the agent performs the monitoring, deriving, determining, and sending processes.

60. A method according to claim 59 including receiving a warning from the server that the agent must be downloaded before allowing access to the database, and allowing the user to input a confirmatory input for transmission to the server apparatus.

61. A method according to any one of claims 58 to 60 wherein the stored information at at least some of the addresses has links to stored information at other addresses, the method including accessing and retrieving information stored at other link addresses, deriving descriptive information using the retrieved information, determining the relevance of the retrieved information by comparing the descriptive information to the profile, and sending the relevant derived descriptive information and corresponding address to the server for the updating of the database.

62. A method according to any one of claims 58 to 61 wherein the stored information includes text, the profile comprises descriptive text, and the descriptive information comprises text.

63. A method according to claim 62 wherein the profile comprises keywords, the descriptive information comprises keywords, and the relevance of the stored information is determined by matching the keywords of the profile to the keywords of the descriptive information for the stored information.

64. A method according to claim 63 wherein the matching process comprises a lexical matching of synonyms.

65. A method according to claim 62 wherein the relevance of the retrieved information is determined by a natural language matching of the text of the profile with the text of the descriptive information.

66. A method according to any one of claims 58 to 65 wherein the network comprises an Internet Protocol network, the stored information includes hypertext markup language, the addresses comprise uniform rescource locators, and the monitoring process comprises monitoring the accessing and retrieval of hypertext markup language by a web browser application for the display of web pages.

67. Client apparatus for accessing a server apparatus providing a search facility to client apparatuses over a network to allow searching for information stored in a plurality of addressable logical locations over the network, the client apparatus comprising:
programme storage for storing programme code for controlling a processor; and
a processor for implementing the programme code stored in the programme storage;
wherein the programme code comprises programme code for controlling the processor to:
monitor the accessing and retrieval of stored information by an application,
derive descriptive information using the retrieved information,
determine the relevance of the retrieved information by comparing the descriptive information to a profile, and
send the relevant derived descriptive information and the corresponding address to the server apparatus for the updating of a database.

68. A computer programme code for controlling a computer to implement the method of any one of claims 37 to 48 or 58 to 66.

69. A carrier medium carrying the computer programme code according to claim 67.
